# FASCICULE DE BREVET EUROPEEN

(11) **EP 4 359 229 B1**
(45) Date de publication et mention de la délivrance du brevet: **20.05.2026**
(21) Numéro de dépôt: 22735218.4
(22) Date de dépôt: 13.06.2022
(51) Int. Cl.: B60C 11/03, B60C 11/12, B60C 11/04, B60C 11/11, B60C 11/13

(54) **BANDE DE ROULEMENT DE PNEUMATIQUE POUR UN VÉHICULE LOURD DE GÉNIE CIVIL AVEC UN COMPROMIS ROBUSTESSE/ THERMIQUE AMÉLIORÉ**
REIFENLAUFFLÄCHE FÜR EIN SCHWERES BAUFAHRZEUG MIT VERBESSERTEM KOMPROMISS ZWISCHEN FESTIGKEIT UND THERMISCHEM VERSCHLEISS
TYRE TREAD FOR A HEAVY CIVIL-ENGINEERING VEHICLE WITH IMPROVED TRADE-OFF BETWEEN STRENGTH/THERMAL WEAR

(30) Priorité: 24.06.2021 FR 2106742
(43) Date de publication de la demande: 01.05.2024
(73) Titulaire: COMPAGNIE GENERALE DES ETABLISSEMENTS MICHELIN, 63000 Clermont-Ferrand (FR)
(72) Inventeur: SPINNLER, Olivier, 63040 CLERMONT-FERRAND Cedex 9 (FR); TRAVERSE, Adrien, 63040 CLERMONT-FERRAND Cedex 9 (FR); VILLA-RECIO, Alvaro, 63040 CLERMONT-FERRAND Cedex 9 (FR)
(74) Mandataire: M.F.P. Michelin
(86) Numéro de dépôt international: PCT/FR2022/051123
(87) Numéro de publication internationale: WO 2022/269162

(56) Documents cités:
- EP-A1- 1 629 952
- EP-A1- 3 795 384
- WO-A1-2017/162953
- FR-A1- 3 058 927
- JP-A- 2008 279 976

## Description

La présente invention a pour objet une bande de roulement de pneumatique pour un véhicule lourd destiné à porter de lourdes charges et à rouler sur des sols irréguliers, pierreux et/ou boueux tel que, par exemple, un véhicule de génie civil de type dumper destiné à être utilisé dans des mines ou des carrières.

Une bande de roulement comprend au moins un matériau à base de caoutchouc et est destinée à constituer la partie périphérique d'un pneumatique et à être usée lors de l'entrée en contact de sa surface de roulement avec un sol.

Une bande de roulement peut être définie géométriquement par trois dimensions : une plus petite dimension ou épaisseur, selon une direction perpendiculaire à la surface de roulement, une dimension intermédiaire ou largeur, selon une direction transversale, et une plus grande dimension ou longueur, selon une direction longitudinale. Lorsque la bande de roulement est intégrée au pneumatique, la direction perpendiculaire à la surface de roulement est également appelée direction radiale, car elle est définie selon un rayon du pneumatique, la direction transversale est également appelée direction axiale, car elle est parallèle à l'axe de rotation du pneumatique, et la direction longitudinale est également appelée direction circonférentielle, car elle est tangente à la circonférence du pneumatique selon la direction de roulage du pneumatique. Dans ce qui suit, « radialement » signifie « selon une direction perpendiculaire à la surface de roulement » ou « selon une direction radiale ».

Pour garantir une performance satisfaisante en adhérence longitudinale, sous couple moteur et sous couple freineur, et en adhérence transversale, il est nécessaire de former, dans la bande de roulement, une combinaison de découpures séparant des éléments en relief, appelée sculpture.

Une découpure est géométriquement caractérisée par son épaisseur, qui est la distance entre les parois de matière la délimitant, et par sa profondeur, qui est la distance entre la surface de roulement et le fond de ladite découpure, c'est-à-dire son point le plus radialement intérieur. L'épaisseur peut varier selon la position radiale du point de mesure, entre la surface de roulement et le fond de la découpure.

Les découpures peuvent être de deux types : les rainures et les incisions. Les rainures sont des découpures larges, permettant essentiellement le stockage et l'évacuation de l'eau ou de la boue présente sur le sol. Une découpure est dite large lorsqu'elle a une épaisseur telle que les parois de matière en vis-à-vis la délimitant n'entrent pas en contact l'une avec l'autre, lors du passage de la bande de roulement dans la surface de contact, le pneumatique étant soumis à des conditions de gonflage et de charge recommandées telles que définies notamment, par exemple, par la norme ISO 4250 et la norme de la « Tire and Rim Association » (Association du Pneumatique et de la Roue) ou TRA. Les incisions sont des découpures étroites, dont les intersections avec la surface de roulement ou arêtes contribuent à l'adhérence sur un sol mouillé grâce à un effet d'arête dans le contact au sol qui permet de casser le film d'eau présent sur le sol. Une découpure est dite étroite lorsqu'elle a une largeur telle que les parois de matière en vis-à-vis la délimitant entrent en contact au moins partiellement l'une avec l'autre, lors du passage de la bande de roulement dans la surface de contact, dans les conditions de charge et de pression du pneumatique spécifiées par la norme TRA comme vu précédemment.

Une découpure est souvent caractérisée par une surface moyenne, équidistante des parois délimitant la découpure et coupant la surface de roulement. L'intersection de cette surface moyenne et de la surface de roulement est appelée ligne moyenne de la découpure. La ligne moyenne d'une découpure n'est pas nécessairement rectiligne, et peut avoir, à titre d'exemples, une forme ondulée ou une forme en zigzag. Une découpure est dite longitudinale, lorsque sa ligne moyenne a une direction moyenne longitudinale, c'est-à-dire qu'elle forme, avec la direction longitudinale, un angle moyen au plus égal à 45°. Une découpure longitudinale fait généralement le tour du pneumatique. Une découpure est dite transversale, lorsque sa ligne moyenne a une direction moyenne transversale, c'est-à-dire qu'elle forme, avec la direction transversale, un angle moyen au plus égal à 45°. Une découpure transversale relie deux découpures longitudinales entre elles ou une découpure longitudinale à un bord de la bande de roulement.

Dans le cas d'une bande de roulement de pneumatique pour un véhicule lourd de génie civil, les éléments en relief sont généralement des blocs. Un bloc est un volume de matière délimité par une face de contact, contenue dans la surface de roulement, par une surface de fond et par des faces latérales reliant la face de contact à la surface de fond. Ces blocs peuvent être arrangés de façon à constituer des rangées longitudinales de blocs, ces rangées étant deux à deux séparées par des découpures longitudinales de types rainures ou incisions, appelées également sillons longitudinaux. En outre, au sein d'une même rangée longitudinale de blocs, les blocs sont le plus souvent deux à deux séparés par des découpures transversales de types rainures ou incisions.

La bande de roulement, intégrée au pneumatique, est le plus souvent caractérisée géométriquement par une largeur L, selon la direction transversale, et une hauteur H, selon une direction perpendiculaire à la surface de roulement. La largeur L est définie comme la largeur transversale de la surface de contact de la bande de roulement du pneumatique neuf avec un sol lisse, tel qu'un sol goudronné, lorsque le pneumatique est soumis à des conditions de pression et de charge nominales recommandées, par exemple, par la norme TRA. La hauteur H est définie, par convention, comme la profondeur radiale maximale mesurée dans les découpures, correspondant à la hauteur radiale de bloc maximale, à l'état neuf. Dans le cas d'un pneumatique pour un véhicule de génie civil de type dumper, et à titre d'exemple, la largeur L est au moins égale à 600 mm et la hauteur H est au moins égale à 60 mm, voire 70 mm.

Les conditions usuelles de roulage d'un pneumatique pour un véhicule de génie civil sont particulièrement sévères. Un tel véhicule est généralement destiné à rouler sur des pistes pierreuses agressives, ce qui nécessite une bonne résistance aux agressions de la bande de roulement des pneumatiques équipant le véhicule, pour garantir à ceux-ci une durée de vie satisfaisante. En outre les charges appliquées au pneumatique, le plus souvent élevées, génèrent, en particulier dans le sommet du pneumatique, d'importantes dissipations thermiques qui créent des élévations de températures susceptibles d'entrainer une dégradation des matériaux à base de caoutchouc du sommet du pneumatique et la ruine prématurée du pneumatique. Par conséquent la résistance aux agressions de la bande de roulement et la maîtrise thermique du sommet sont deux enjeux majeurs pour un pneumatique destiné à équiper un véhicule lourd de génie civil.

Concernant la maîtrise thermique du sommet, il est connu que la température de sommet du pneumatique est d'autant plus basse que la bande de roulement est aérée, c'est-à-dire que le volume de découpures assurant la ventilation est élevé. Toutefois, une tendance actuelle est de développer des bandes de roulement à durée de vie augmentée, donc avec un volume augmenté de matière à user, c'est-à-dire avec un volume diminué de découpures. Ainsi le document WO 2017162953A1 propose une bande de roulement dite incisée, dont les incisions peuvent toutefois être sensibles aux agressions et insuffisamment efficaces vis-à-vis de la ventilation thermique. Le document WO 2020229176A1 propose une bande roulement incisée dont les incisions sont robustifiées vis-à-vis des agressions grâce à leur géométrie optimisée, mais sans une efficacité améliorée de la ventilation par lesdites incisions.

Les inventeurs se sont donnés pour objectif d'améliorer, pour une bande de roulement de pneumatique pour un véhicule lourd de génie civil, comprenant au moins en partie des blocs séparés les uns des autres par des incisions, le compromis entre la résistance aux agressions mécaniques par des sols pierreux et la capacité de ventilation thermique.

Cet objectif a été atteint grâce à une bande de roulement de pneumatique pour un véhicule lourd de génie civil, destinée à entrer en contact avec un sol par l'intermédiaire d'une surface de roulement, comprenant des blocs délimités par des découpures, et ayant une largeur, et une épaisseur définie comme la profondeur maximale de découpure,
- la bande de roulement ayant une portion médiane, symétrique par rapport à un plan longitudinal médian et ayant une largeur au plus égale à 60% de la largeur de la bande de roulement,
- la portion médiane comprenant au moins une rangée longitudinale de blocs, dont chaque bloc est délimité transversalement par deux sillons longitudinaux et longitudinalement par deux découpures transversales inter-blocs,
- chaque sillon longitudinal et chaque découpure transversale inter-blocs ayant respectivement une profondeur au moins égale à 50% de l'épaisseur de bande de roulement, et étant respectivement une découpure étagée, comprenant une portion radialement extérieure débouchant sur la surface de roulement et une portion radialement intérieure s'étendant à partir de la portion radialement extérieure jusqu'à une extrémité radialement intérieure (4121, 4221),
- chaque portion radialement extérieure ayant une épaisseur, mesurée entre les parois de matière qui la délimitent, comprise entre une épaisseur minimale et une épaisseur maximale,
- chaque portion radialement intérieure ayant une épaisseur, mesurée entre les parois de matière qui la délimitent, comprise entre une épaisseur minimale et une épaisseur maximale,
- l'épaisseur maximale de chaque portion radialement extérieure étant au plus égale à 20% de la profondeur de la découpure correspondante et strictement inférieure à l'épaisseur maximale de la portion radialement intérieure correspondante
- et l'épaisseur minimale de chaque portion radialement extérieure étant au moins égale à 5% de la profondeur de la découpure correspondante.

L'invention est basée essentiellement sur une optimisation des épaisseurs respectives de la portion radialement extérieure et de la portion radialement intérieure de toute découpure longitudinale ou transversale délimitant tout bloc appartenant à une rangée longitudinale spécifique de blocs. Ladite rangée longitudinale spécifique de blocs est positionnée dans une portion médiane de la bande de roulement. L'invention vise à garantir un compromis entre la résistance à la fissuration et la capacité de ventilation thermique desdites découpures.

Dans le contexte de l'invention, une portion médiane de la bande de roulement est une portion de bande de roulement symétrique par rapport à un plan longitudinal médian, passant par le milieu de la bande de roulement et perpendiculaire à la surface de roulement, et ayant une largeur au plus égale à 60% de la largeur de la bande de roulement, ladite largeur de la bande de roulement étant mesurée selon une direction transversale entre deux bords latéraux de la surface de roulement. La portion médiane contient une ou plusieurs rangées longitudinales de blocs selon l'invention, mais peut également contenir d'autres éléments de sculpture. En d'autres termes, la portion médiane ne contient pas nécessairement exclusivement des rangées longitudinales de blocs selon l'invention.

Par définition, une découpure longitudinale délimitant un bloc de portion médiane de la bande de roulement est appelée sillon longitudinal, et une découpure transversale délimitant un bloc de portion médiane de la bande de roulement est appelée découpure transversale inter-blocs.

Tout sillon longitudinal, respectivement toute découpure transversale inter-blocs, est une découpure étagée, comprenant une portion radialement extérieure débouchant sur la surface de roulement et une portion radialement intérieure s'étendant à partir de la portion radialement extérieure jusqu'au fond de la découpure. Toute portion radialement extérieure a une épaisseur, mesurée entre les parois de matière qui la délimite, pouvant varier, selon la direction perpendiculaire à la surface de roulement, entre la surface de roulement, c'est-à-dire le point le plus radialement extérieur de ladite portion, et le point le plus radialement intérieur de ladite portion : cette épaisseur de portion radialement extérieure est donc comprise entre une épaisseur minimale et une épaisseur maximale. De façon analogue, toute portion radialement intérieure a une épaisseur, mesurée entre les parois de matière qui la délimite, pouvant varier, selon la direction perpendiculaire à la surface de roulement, entre le point le plus radialement extérieur de ladite portion, et le fond de la découpure, c'est-à-dire le point le plus radialement intérieur de ladite portion : cette épaisseur de portion radialement intérieure est donc comprise entre une épaisseur minimale et une épaisseur maximale. Les épaisseurs précédemment décrites sont usuellement mesurées sur des coupes de bande de roulement, délimitées par deux plans transversaux, perpendiculaires à la surface de roulement.

Tout sillon longitudinal, respectivement toute découpure transversale inter-blocs, a une profondeur mesurée, selon une direction perpendiculaire à la surface de roulement, entre la surface de roulement et le fond dudit sillon longitudinal, respectivement de ladite découpure transversale inter-blocs. Dans le contexte de l'invention, cette profondeur est au moins égale à 50% de la profondeur maximale de découpure, appelée, par convention, hauteur de la bande de roulement, correspondant à l'épaisseur maximale de matière à user avant disparition de toute découpure sur la surface de roulement.

Selon une première caractéristique essentielle de l'invention, l'épaisseur maximale de chaque portion radialement extérieure est au plus égale à 20% de la profondeur de la découpure correspondante et strictement inférieure à l'épaisseur maximale de la portion radialement intérieure correspondante.

Une limite haute de l'épaisseur maximale de la portion radialement extérieure d'une découpure, fixée à 20% de la profondeur de la découpure, permet, d'une part, de limiter le volume de la découpure, et donc son impact sur la réduction de volume de matière à user, ce qui est favorable à la durée de vie en usure, et, d'autre part, de rigidifier les blocs qu'elle délimite, par une entrée en contact des parois délimitant ladite portion radialement extérieure, et par conséquent de limiter les déformations en fond de découpure, et donc, les risques de fissuration en fond de découpure. Une portion radialement extérieure avec une telle limitation d'épaisseur est qualifiée d'incision.

De plus une limite haute de l'épaisseur maximale de la portion radialement extérieure d'une découpure, strictement inférieure à l'épaisseur maximale de la portion radialement intérieure correspondante, garantit une surépaisseur de la portion radialement intérieure de la découpure, et donc une limitation des contraintes en fond de découpure, ce qui contribue à minimiser le risque de fissuration en fond de découpure. En outre cette surépaisseur de la portion radialement intérieure a aussi pour effet de créer un canal de circulation de l'air en fond de sculpture, là où les calories sont les plus difficiles à évacuer, et par conséquent de contribuer à la ventilation de la découpure, et par conséquent à une limitation du niveau thermique de la bande de roulement. Selon un mode de réalisation particulier de la portion radialement intérieure, son épaisseur augmente depuis une valeur minimale à l'interface avec la portion radialement extérieure jusqu'à une valeur maximale au voisinage du fond de découpure. Dans ce cas la forme d'une telle portion radialement intérieure est qualifiée de goutte d'eau.

Selon une deuxième caractéristique essentielle de l'invention, l'épaisseur minimale de chaque portion radialement extérieure est au moins égale à 5% de la profondeur de la découpure correspondante.

Une limite basse de l'épaisseur minimale de chaque portion radialement extérieure, fixée à 5% de la profondeur de la découpure correspondante, garantit, dans la portion radialement extérieure, une circulation d'air contribuant à la ventilation de la découpure, et par conséquent à une limitation du niveau thermique de la bande de roulement.

Préférentiellement l'épaisseur minimale de chaque portion radialement extérieure est au moins égale à 10% de la profondeur de la découpure correspondante. Une limite basse de l'épaisseur minimale de chaque portion radialement extérieure, fixée à 10% de la profondeur de la découpure correspondante, améliore encore, dans la portion radialement extérieure, une circulation d'air contribuant à une meilleure ventilation de la découpure, et par conséquent à une limitation encore plus efficace du niveau thermique de la bande de roulement, tout en conservant un blocage suffisant dans le contact.

Encore préférentiellement l'épaisseur minimale et l'épaisseur maximale de chaque portion radialement extérieure sont égales entre elles, de telle sorte que l'épaisseur en tout point de ladite portion radialement extérieure est constante. Dans ce cas, l'épaisseur de la portion radialement extérieure est constante sur toute la hauteur de ladite portion radialement extérieure, ce qui permet d'avoir un canal de circulation d'air de section constante, garantissant une ventilation homogène et efficace sur toute la hauteur de la portion radialement extérieure.

Avantageusement l'épaisseur maximale de chaque portion radialement intérieure est au moins égale à 15% de la profondeur de la découpure correspondante. Une limite basse de l'épaisseur maximale de chaque portion radialement intérieure, fixée à 15% de la profondeur de la découpure correspondante, permet d'éviter la fissuration du fond de la découpure pendant le temps nécessaire à l'atteinte du fond de la découpure par usure de la bande de roulement. En d'autres termes, cette limite basse garantit l'atteinte du niveau d'usure à la profondeur de la découpure, sans apparition de fissure.

Encore avantageusement chaque portion radialement intérieure a une hauteur au moins égale à 1.5 fois l'épaisseur maximale de la portion radialement intérieure correspondante. Dans le cas d'une portion radialement intérieure en forme de goutte d'eau, dont l'épaisseur varie depuis une épaisseur minimale, au niveau de la transition avec la portion radialement extérieure, jusqu'à une épaisseur maximale, en fond de découpure, l'angle de chaque paroi de ladite portion radialement intérieure, formé avec la direction radiale, appelé usuellement angle de dépouille, permet, d'une part, de limiter, au cours de la fabrication, l'effort de démoulage de la lamelle destinée à mouler la découpure, et, d'autre part, de limiter la dégradation par arrachement de la zone de transition entre les portions respectivement radialement extérieure et radialement intérieure.

Avantageusement chaque portion radialement intérieure a une extrémité radialement intérieure circulaire dont le diamètre est égal à l'épaisseur maximale de la portion radialement intérieure correspondante. Un arc de cercle à l'extrémité radialement intérieure d'une portion radialement intérieure, c'est-à-dire en fond de découpure, est la forme qui permet d'avoir le plus grand rayon de courbure constant, permettant d'optimiser la réduction de concentration de contrainte pour un volume donné de portion radialement intérieure, et donc de réduire le risque de fissuration.

Encore avantageusement, chaque bloc ayant une longueur longitudinale, la profondeur de chaque découpure transversale inter-blocs est au plus égale à la longueur longitudinale de bloc, de préférence au plus égale à 0.8 fois la longueur longitudinale de bloc. Le ratio entre la profondeur de chaque découpure transversale inter-blocs et la longueur longitudinale de bloc est usuellement appelé élancement longitudinal du bloc et caractérise sa rigidité longitudinale du point de vue géométrique. Un élancement longitudinal limité à 1, de préférence à 0.8, permet en particulier de limiter la flexion du bloc, sous couple, et donc l'usure irrégulière dite en dents de scie. Un élancement longitudinal pouvant atteindre 0.8, voire 1, est rendu possible vis-à-vis du risque d'augmentation de la thermique grâce à la bonne capacité de ventilation des découpures délimitant le bloc.

Selon un premier mode de réalisation particulier, la bande de roulement comprend des découpures transversales extérieures, débouchant dans les sillons longitudinaux délimitant les blocs, ayant chacune une profondeur au moins égale à 50% de la hauteur de bande de roulement, et comprenant une portion radialement extérieure et une portion radialement intérieure, chaque portion radialement extérieure ayant une épaisseur comprise entre une épaisseur minimale et une épaisseur maximale, et chaque portion radialement intérieure ayant une épaisseur comprise entre une épaisseur minimale et une épaisseur maximale. Dans ce mode de réalisation particulier, l'épaisseur maximale de chaque portion radialement extérieure est au plus égale à 20% de la profondeur de la découpure correspondante et strictement inférieure à l'épaisseur maximale de la portion radialement intérieure correspondante. En outre l'épaisseur minimale de chaque portion radialement extérieure est au moins égale à 5% de la profondeur de la découpure correspondante. En d'autres termes, ces découpures transversales extérieures ont les mêmes caractéristiques que celles des sillons longitudinaux et des découpures transversales inter-blocs, et donc les mêmes avantages techniques de résistance à la fissuration et de capacité de ventilation thermique.

Préférentiellement l'épaisseur minimale de la portion radialement extérieure de chaque découpure transversale extérieure est au moins égale à 10% de la profondeur de la découpure correspondante. Une limite basse de l'épaisseur minimale de chaque portion radialement extérieure, fixée à 10% de la profondeur de la découpure correspondante, améliore encore, dans la portion radialement extérieure, une circulation d'air contribuant à une meilleure ventilation de la découpure, et par conséquent à une limitation encore plus efficace du niveau thermique de la bande de roulement, tout en conservant un blocage suffisant dans le contact.

Encore préférentiellement l'épaisseur minimale et l'épaisseur maximale de la portion radialement extérieure de chaque découpure transversale extérieure sont égales entre elles. Dans ce cas, l'épaisseur de la portion radialement extérieure est constante sur toute la hauteur de ladite portion radialement extérieure, ce qui permet d'avoir un canal de circulation d'air de section constante, garantissant une ventilation homogène et efficace sur toute la hauteur de la portion radialement extérieure.

Avantageusement l'épaisseur maximale de la portion radialement intérieure de chaque découpure transversale extérieure est au moins égale à 15% de la profondeur de la découpure correspondante. Une limite basse de l'épaisseur maximale de chaque portion radialement intérieure, fixée à 15% de la profondeur de la découpure correspondante, permet d'éviter la fissuration du fond de la découpure pendant le temps nécessaire à l'atteinte du fond de la découpure par usure de la bande de roulement. En d'autres termes, cette limite basse garantit l'atteinte du niveau d'usure à la profondeur de la découpure, sans apparition de fissure.

Encore avantageusement la portion radialement intérieure de chaque découpure transversale extérieure a une hauteur au moins égale à 1.5 fois l'épaisseur maximale de la portion radialement intérieure correspondante. Dans le cas d'une portion radialement intérieure en forme de goutte d'eau, dont l'épaisseur varie depuis une épaisseur minimale, au niveau de la transition avec la portion radialement extérieure, jusqu'à une épaisseur maximale, en fond de découpure, l'angle de chaque paroi de ladite portion radialement intérieure, formé avec la direction radiale, appelé usuellement angle de dépouille, permet, d'une part, de limiter, au cours de la fabrication, l'effort de démoulage de la lamelle destinée à mouler la découpure, et, d'autre part, de limiter la dégradation par arrachement de la zone de transition entre les portions respectivement radialement extérieure et radialement intérieure.

Avantageusement la portion radialement intérieure de chaque découpure transversale extérieure a une extrémité radialement intérieure circulaire dont le diamètre est égal à l'épaisseur maximale de la portion radialement intérieure correspondante. Un arc de cercle à l'extrémité radialement intérieure d'une portion radialement intérieure, c'est-à-dire en fond de découpure, est la forme qui permet d'avoir le plus grand rayon de courbure constant, permettant d'optimiser la réduction de concentration de contrainte pour un volume donné de portion radialement intérieure, et donc de réduire le risque de fissuration.

Selon un deuxième mode de réalisation particulier, chaque bloc comprend au moins une découpure intérieure ayant une profondeur au plus égale à la plus petite des profondeurs respectives de chaque sillon longitudinal et de chaque découpure transversale inter-blocs délimitant le bloc. La présence d'au moins une découpure à l'intérieur des blocs entraine un refroidissement supplémentaire de la bande de roulement, ce qui peut permettre éventuellement l'utilisation d'une composition caoutchoutique de bande déroulement plus hystérétique, c'est-à-dire générant plus de chaleur, mais plus résistante aux agressions. Une découpure interne est préférentiellement, mais non obligatoirement, débouchante dans les faces du bloc. Dans le cas où elle ne débouche pas dans les faces du bloc, elle est dite aveugle.

Avantageusement, chaque découpure intérieure comprenant une portion radialement extérieure ayant une épaisseur comprise entre une épaisseur minimale et une épaisseur maximale, l'épaisseur maximale de la portion radialement extérieure de la découpure intérieure est au plus égale à la plus petite des épaisseurs maximales de la portion radialement extérieure de chaque sillon longitudinal et de chaque découpure transversale inter-blocs délimitant le bloc. Une découpure intérieure ayant à la fois une profondeur plus faible et une épaisseur maximale de portion radialement extérieure plus petite qu'un sillon longitudinal et qu'une découpure transversale inter-blocs a la même capacité de ventilation qu'un sillon longitudinal et qu'une découpure transversale inter-blocs. Un volume de découpure intérieure ainsi limité permet de ne pas trop réduire la volume de matière à user, et par conséquent la durée de vie en usure.

Encore avantageusement l'épaisseur maximale de la portion radialement extérieure de la découpure intérieure est au moins égale à 5% et au plus égale à 20% de la profondeur de la découpure intérieure correspondante. Cette plage de valeurs pour l'épaisseur maximale garantit un compromis satisfaisant entre la capacité de ventilation de la découpure intérieure et son impact sur la réduction du volume de matière à user.

Avantageusement l'épaisseur minimale de la portion radialement extérieure de la découpure intérieure est au moins égale à 5%, de préférence au moins égale à 10% de la profondeur de la découpure intérieure correspondante. Cette limite supérieure de l'épaisseur minimale contribue à une ventilation optimale de la découpure intérieure.

Préférentiellement l'épaisseur minimale et l'épaisseur maximale de la portion radialement extérieure de chaque découpure intérieure sont égales entre elles, de telle sorte que l'épaisseur en tout point de ladite portion radialement extérieure est constante. Dans ce cas, l'épaisseur de la portion radialement extérieure est constante sur toute la hauteur de ladite portion radialement extérieure, ce qui permet d'avoir un canal de circulation d'air de section constante, garantissant une ventilation homogène et efficace sur toute la hauteur de la portion radialement extérieure.

Encore préférentiellement, chaque découpure intérieure comprenant une portion radialement intérieure ayant une épaisseur comprise entre une épaisseur minimale et une épaisseur maximale, l'épaisseur maximale de la portion radialement extérieure de la découpure intérieure est strictement inférieure à l'épaisseur maximale de la portion radialement intérieure de la découpure intérieure correspondante. Dans l'hypothèse où la composition caoutchoutique de la bande de roulement a une vitesse d'usure lente, le temps nécessaire pour que l'usure atteigne le fond d'une découpure intérieure peut être suffisamment long pour qu'une fissuration ait été initiée en fond de cette découpure intérieure. Il est alors intéressant que celle-ci comprenne une portion radialement intérieure ayant une épaisseur élargie, telle qu'une goutte d'eau, pour diminuer le risque de fissuration.

Avantageusement l'épaisseur maximale de la portion radialement intérieure de la découpure intérieure est au moins égale à 15% de la profondeur de la découpure intérieure correspondante. Une limite basse de l'épaisseur maximale, de chaque portion radialement intérieure, fixée à 15% de la profondeur de la découpure intérieure correspondante, permet d'éviter la fissuration du fond de la découpure intérieure pendant le temps nécessaire à l'atteinte du fond de la découpure intérieure par usure de la bande de roulement. En d'autres termes, cette limite basse garantit l'atteinte du niveau d'usure à la profondeur de la découpure intérieure, sans apparition de fissure.

Encore avantageusement la portion radialement intérieure de chaque découpure intérieure a une hauteur au moins égale à 1.5 fois l'épaisseur maximale de la portion radialement intérieure de la découpure intérieure correspondante. Dans le cas d'une portion radialement intérieure en forme de goutte d'eau, dont l'épaisseur varie depuis une épaisseur minimale, au niveau de la transition avec la portion radialement extérieure, jusqu'à une épaisseur maximale, en fond de découpure, l'angle de chaque paroi de ladite portion radialement intérieure, formé avec la direction radiale, appelé usuellement angle de dépouille, permet, d'une part, de limiter, au cours de la fabrication, l'effort de démoulage de la lamelle destinée à mouler la découpure, et, d'autre part, de limiter la dégradation par arrachement de la zone de transition entre les portions respectivement radialement extérieure et radialement intérieure.

Avantageusement la portion radialement intérieure de chaque découpure intérieure a une extrémité radialement intérieure circulaire dont le diamètre est égal à l'épaisseur maximale de la portion radialement intérieure de la découpure intérieure correspondante. Un arc de cercle à l'extrémité radialement intérieure d'une portion radialement intérieure, c'est-à-dire en fond de découpure, est la forme qui permet d'avoir le plus grand rayon de courbure constant, permettant d'optimiser la réduction de concentration de contrainte pour un volume donné de portion radialement intérieure, et donc de réduire le risque de fissuration.

Selon une variante préférée du deuxième mode de réalisation particulier, chaque découpure intérieure est transversale. Une direction transversale de découpure intérieure est avantageuse pour l'adhérence du pneumatique en freinage, donc pour la sécurité. En revanche, la présence d'une découpure intérieure longitudinale, proche du plan longitudinal médian de la bande de roulement, fragilise la bande de roulement dans cette zone de fortes pressions de contact avec le sol.

Selon un mode de réalisation préféré, la portion médiane de la bande de roulement comprend une rangée longitudinale de blocs centrée sur le plan longitudinal médian. Pour un pneumatique monté sur un véhicule lourd de génie civil, et fonctionnant à ses conditions normales de charge et de pression, la pression de contact avec le sol est maximale au centre de la bande de roulement, défini par le plan longitudinal médian. La présence de blocs, et non d'un sillon longitudinal, dans cette zone, permet d'avoir une bande de roulement plus robuste.

Dans un but de protection vis-à-vis des agressions par des pierres, il peut être avantageux d'avoir une surépaisseur en fond de découpure, surtout aux intersections entre les diverses découpures précédemment décrites : sillons longitudinaux, découpures transversales inter-blocs et découpures transversales extérieures.

La présence de protubérances chasse-pierres, ayant la forme de nervures, peut être avantageuse en particulier dans les sillons longitudinaux.

L'invention a également pour objet un pneumatique destiné à équiper un véhicule lourd de génie civil comprenant une bande de roulement selon l'un des modes de réalisation précédemment décrits.

Les caractéristiques de l'invention sont illustrées par les figures 1 à 8 suivantes, schématiques et non représentées à l'échelle :
- Figure 1 : Vue de dessus d'une bande de roulement selon l'invention
- Figure 2A : Vue de dessus d'une portion médiane de bande de roulement selon l'invention
- Figure 2B : Vue en coupe d'un sillon longitudinal de portion médiane de bande de roulement selon l'invention
- Figure 2C : Vue en coupe d'une découpure transversale inter-blocs de portion médiane de bande de roulement selon l'invention
- Figure 2D : Vue en coupe d'une découpure transversale extérieure de portion médiane de bande de roulement selon l'invention
- Figure 3A : Vue de dessus d'une portion médiane de bande de roulement selon un mode particulier de réalisation de l'invention, comprenant des découpures transversales intérieures
- Figure 3B : Vue en coupe d'une portion médiane de bande de roulement selon un mode particulier de réalisation de l'invention, comprenant des découpures transversales intérieures
- Figure 3C : Vue en coupe d'une découpure transversale intérieure comprenant une seule portion
- Figure 3D : Vue en coupe d'une découpure transversale intérieure comprenant une portion radialement extérieure et une portion radialement intérieure
- Figure 4 : Premier domaine de variation d'une épaisseur de portion radialement extérieure respectivement d'un sillon longitudinal, d'une découpure transversale inter-blocs et d'une découpure transversale extérieure, en fonction de la profondeur de découpure
- Figure 5 : Second domaine de variation d'une épaisseur de portion radialement extérieure respectivement d'un sillon longitudinal, d'une découpure transversale inter-blocs et d'une découpure transversale extérieure en fonction de la profondeur de découpure
- Figure 6 : Premier domaine de variation d'une épaisseur de portion radialement extérieure d'une découpure intérieure, en fonction de la profondeur de la découpure intérieure
- Figure 7 : Deuxième domaine de variation d'une épaisseur de portion radialement extérieure d'une découpure intérieure, en fonction de la profondeur de la découpure intérieure
- Figure 8 : Troisième domaine de variation d'une épaisseur de portion radialement extérieure d'une découpure intérieure, en fonction de la profondeur de la découpure intérieure

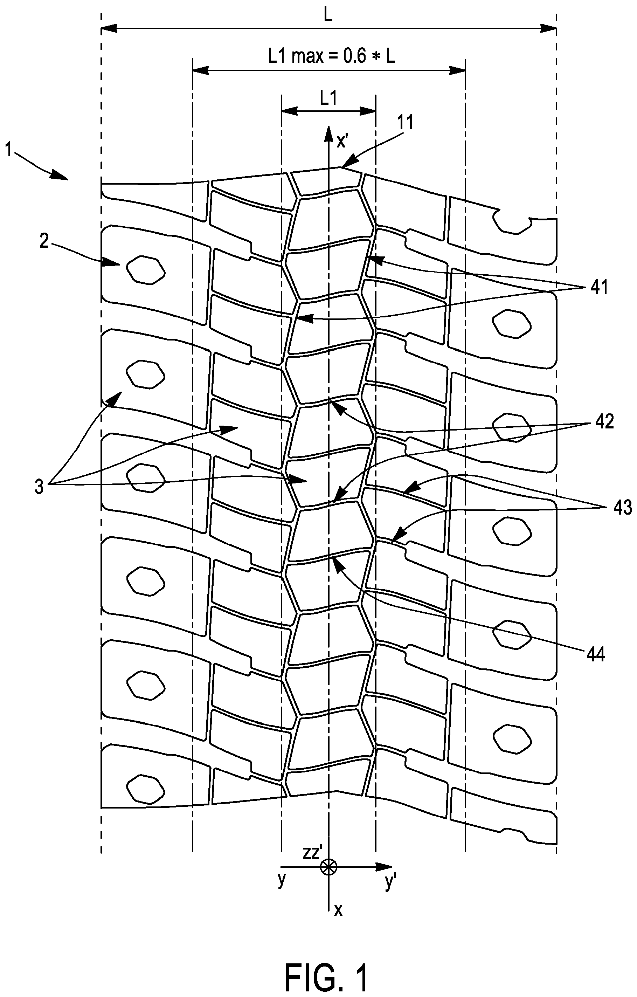

La figure 1 est une vue de dessus d'une bande de roulement 1 selon l'invention. La bande de roulement 1 de pneumatique pour un véhicule lourd de génie civil, destinée à entrer en contact avec un sol par l'intermédiaire d'une surface de roulement 2, comprend des blocs 3 délimités par des découpures (41, 42), et a une largeur L, selon une direction transversale YY', et une hauteur H (non représentée sur la figure 1), selon une direction ZZ', définie comme la profondeur maximale de découpure perpendiculaire à la surface de roulement 2. La bande de roulement a une portion médiane 11, symétrique par rapport à un plan longitudinal médian XZ et ayant une largeur L1 au plus égale à L1max = 60% de la largeur L de la bande de roulement. Dans le mode de réalisation représenté sur la figure 1, la portion médiane 11 est constituée par une unique rangée longitudinale de blocs 3, dont chaque bloc 3 est délimité transversalement, selon la direction transversale YY', par deux sillons longitudinaux 41 et longitudinalement, selon une direction longitudinale XX', par deux découpures transversales inter-blocs 42. Cette unique rangée longitudinale de blocs 3 de largeur L1 est centrée sur le plan longitudinal médian XZ. Plus généralement, la portion médiane 11 peut comprendre plusieurs rangées longitudinales de blocs selon l'invention, ou une combinaison, selon la direction transversale, d'au moins une rangée longitudinale de blocs selon l'invention avec d'autres éléments de sculpture. Dans le mode de réalisation représenté sur la figure 1, la bande de roulement 1 comprend également des découpures transversales extérieures 43, débouchant dans les sillons longitudinaux 41 délimitant les blocs 3.

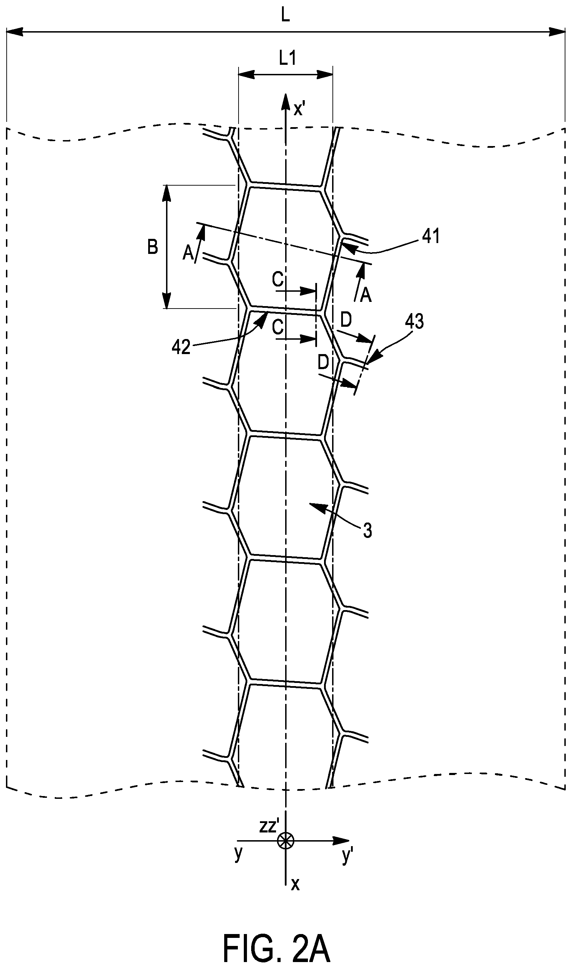

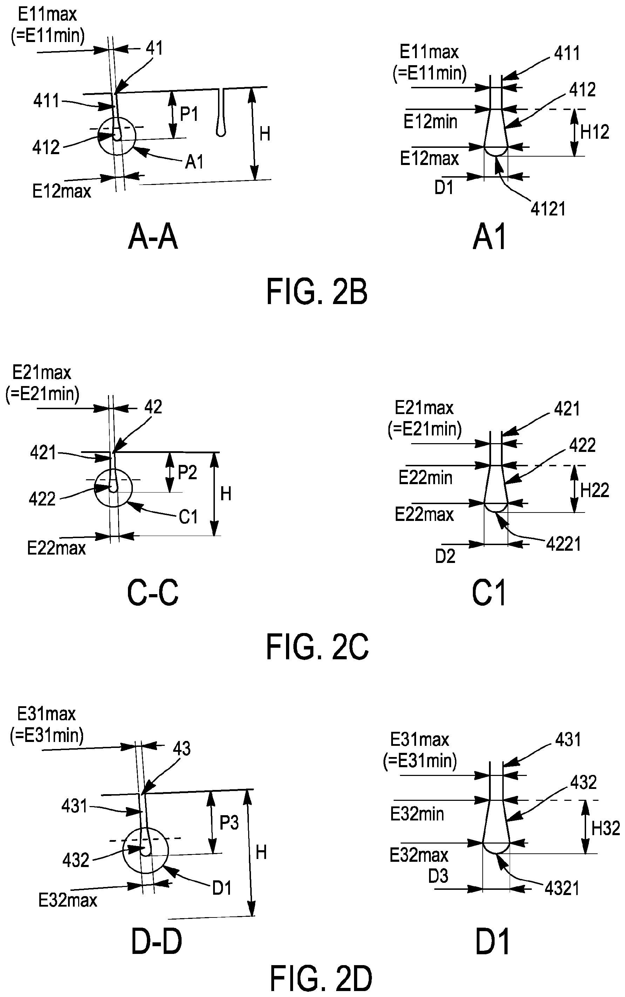

La figure 2A est une vue de dessus d'une portion médiane de bande de roulement selon l'invention. Comme vu sur la figure 1, la portion médiane de bande de roulement a une largeur L1 au plus égale à 60% de la largeur L de bande de roulement. Tout bloc 3 de portion médiane a une longueur longitudinale B, pouvant varier d'un bloc à l'autre. Le plan de coupe A-A définit une coupe transversale de sillon longitudinal 41, tel que représentée par la figure 2B. Le plan de coupe C-C définit une coupe transversale de découpure transversale inter-blocs 42, tel que représentée par la figure 2C. Le plan de coupe D-D définit une coupe transversale de découpure transversale extérieure 43, tel que définie par la figure 2D.

La figure 2B est une vue en coupe d'un sillon longitudinal 41 de portion médiane de bande de roulement selon l'invention. La figure 2B représente d'une part la coupe A-A du sillon longitudinal 41 dans son ensemble, d'autre part une vue de détail A1 de la portion radialement intérieure 412 dudit sillon longitudinal 41. Le sillon longitudinal 41 a une profondeur P1 au moins égale à 50% de la hauteur H de bande de roulement, et comprend respectivement une portion radialement extérieure 411 et une portion radialement intérieure 412. Dans le cas général, la portion radialement extérieure 411 a une épaisseur, mesurée entre les parois de matière qui la délimitent, comprise entre une épaisseur minimale E11min et une épaisseur maximale E11max. Dans le cas représenté, l'épaisseur minimale E11min et l'épaisseur maximale E11max de la portion radialement extérieure 411 sont égales entre elles, de telle sorte que l'épaisseur en tout point de ladite portion radialement extérieure 411 est constante. La portion radialement intérieure 412 a une épaisseur, mesurée entre les parois de matière qui la délimitent, comprise entre une épaisseur minimale E12min et une épaisseur maximale E12max, qui, dans le cas général, ne sont pas égales. Selon l'invention, l'épaisseur maximale E11max de la portion radialement extérieure 411 est au plus égale à 20% de la profondeur P1 de la découpure 41 correspondante et strictement inférieure à l'épaisseur maximale E12max de la portion radialement intérieure 412 correspondante, et l'épaisseur minimale E11min de chaque portion radialement extérieure 411 est au moins égale à 5% de la profondeur P1 de la découpure 41 correspondante. Sur la vue de détail A1, selon un mode de réalisation particulier, la portion radialement intérieure 412 a une hauteur H12 au moins égale à 1.5 fois son épaisseur maximale E12max, et une extrémité radialement intérieure 4121 circulaire dont le diamètre D1 est égal à son épaisseur maximale E12max.

La figure 2C est une vue en coupe d'une découpure transversale inter-blocs 42 de portion médiane de bande de roulement selon l'invention. La figure 2C représente d'une part la coupe C-C de la découpure transversale inter-blocs 42 dans son ensemble, d'autre part une vue de détail C1 de la portion radialement intérieure 422 de ladite découpure transversale inter-blocs 42. La découpure transversale inter-blocs 42 a une profondeur P2 au moins égale à 50% de la hauteur H de bande de roulement, et comprend respectivement une portion radialement extérieure 421 et une portion radialement intérieure 422. Dans le cas général, la portion radialement extérieure 421 a une épaisseur comprise entre une épaisseur minimale E21min et une épaisseur maximale E21max. Dans le cas représenté, l'épaisseur minimale E21min et l'épaisseur maximale E21max de la portion radialement extérieure 421 sont égales entre elles, de telle sorte que l'épaisseur en tout point de ladite portion radialement extérieure 421 est constante. La portion radialement intérieure 422 a une épaisseur comprise entre une épaisseur minimale E22min et une épaisseur maximale E22max, qui, dans le cas général, ne sont pas égales. Selon l'invention, l'épaisseur maximale E21max de la portion radialement extérieure 421 est au plus égale à 20% de la profondeur P2 de la découpure 42 correspondante et strictement inférieure à l'épaisseur maximale E22max de la portion radialement intérieure 422 correspondante, et l'épaisseur minimale E21min de chaque portion radialement extérieure 421 est au moins égale à 5% de la profondeur P2 de la découpure 42 correspondante. Sur la vue de détail C1, selon un mode de réalisation particulier, la portion radialement intérieure 422 a une hauteur H22 au moins égale à 1.5 fois son épaisseur maximale E22max, et une extrémité radialement intérieure 4221 circulaire dont le diamètre D2 est égal à son épaisseur maximale E22max.

La figure 2D est une vue en coupe d'une découpure transversale extérieure 43 de portion médiane de bande de roulement selon un mode de réalisation particulier de l'invention. La figure 2D représente d'une part la coupe D-D de la découpure transversale extérieure 43 dans son ensemble, d'autre part une vue de détail D1 de la portion radialement intérieure 432 de ladite découpure transversale extérieure 43. La découpure transversale extérieure 43 a une profondeur P3 au moins égale à 50% de la hauteur H de bande de roulement, et comprend respectivement une portion radialement extérieure 431 et une portion radialement intérieure 432. Dans le cas général, la portion radialement extérieure 431 a une épaisseur comprise entre une épaisseur minimale E31min et une épaisseur maximale E31max. Dans le cas représenté, l'épaisseur minimale E31min et l'épaisseur maximale E31max de la portion radialement extérieure 431 sont égales entre elles, de telle sorte que l'épaisseur en tout point de ladite portion radialement extérieure 431 est constante. La portion radialement intérieure 432 a une épaisseur comprise entre une épaisseur minimale E32min et une épaisseur maximale E32max, qui, dans le cas général, ne sont pas égales. Selon un mode de réalisation particulier de l'invention, l'épaisseur maximale E31max de la portion radialement extérieure 431 est au plus égale à 20% de la profondeur P3 de la découpure 43 correspondante et strictement inférieure à l'épaisseur maximale E32max de la portion radialement intérieure 432 correspondante, et l'épaisseur minimale E31min de chaque portion radialement extérieure 431 est au moins égale à 5% de la profondeur P3 de la découpure 43 correspondante. Sur la vue de détail D1, selon un mode de réalisation particulier, la portion radialement intérieure 432 a une hauteur H32 au moins égale à 1.5 fois son épaisseur maximale E32max, et une extrémité radialement intérieure 4321 circulaire dont le diamètre D3 est égal à son épaisseur maximale E32max.

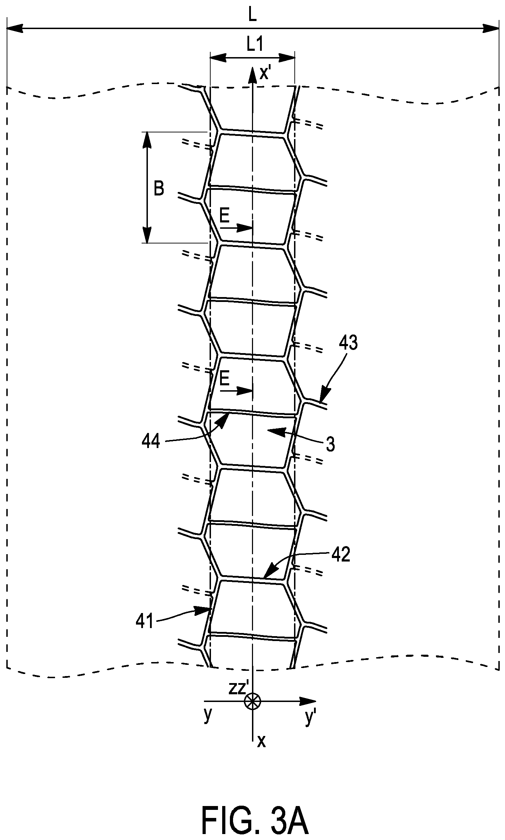

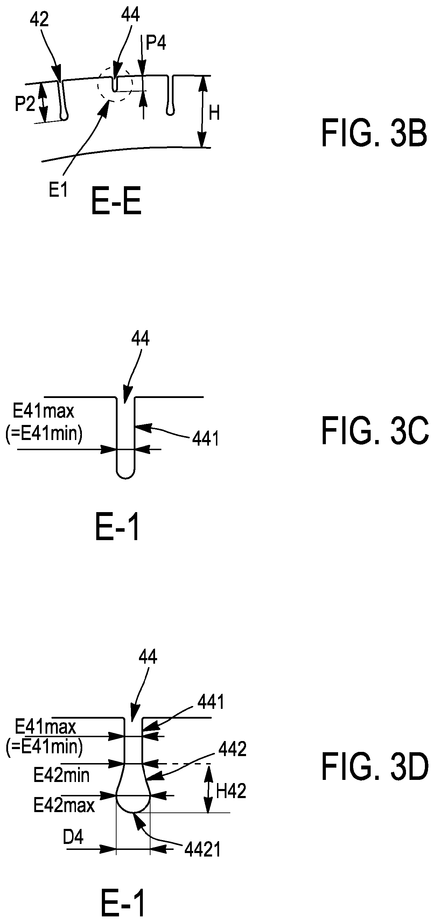

La figure 3A est une vue de dessus d'une portion médiane de bande de roulement selon un mode de réalisation particulier de l'invention, comprenant des découpures transversales intérieures 44. Dans ce mode de réalisation particulier, tout bloc 3 comprend une découpure transversale intérieure 44, sensiblement parallèle aux découpures transversales inter-blocs 42 le délimitant, et débouchant dans les 2 sillons longitudinaux 41 le délimitant. Le plan de coupe E-E, selon le plan longitudinal médian XZ, définit une coupe transversale de l'alternance de découpures transversales intérieures 44 et de découpures transversales inter-blocs 42, telle que représentée sur la figure 3B. En outre deux types de découpures intérieures 44 sont représentés par la vue de détail E1 respectivement des figures 3C et 3D.

La figure 3B est une vue en coupe d'une portion médiane de bande de roulement selon un mode particulier de réalisation de l'invention, comprenant des découpures transversales intérieures 44. Selon la direction longitudinale X, une découpure transversale intérieure 44, ayant une profondeur P4, alterne avec une découpure transversale inter-blocs 42, ayant une profondeur P2.

La figure 3C est une vue en coupe d'une découpure transversale intérieure 44 comprenant une seule portion, correspondant au détail E1 de la figure 3B. Dans ce cas particulier, les portions respectivement radialement intérieure et radialement extérieure sont confondues en une seule portion 441. En outre, sur le mode de réalisation représenté, l'épaisseur minimale E41min et l'épaisseur maximale E41max de la portion 441 sont égales entre elles, de telle sorte que l'épaisseur en tout point de ladite portion 441 est constante.

La figure 3D est une vue en coupe d'une découpure transversale intérieure 44 comprenant respectivement une portion radialement extérieure 441 et une portion radialement intérieure 442, correspondant au détail E1 de la figure 3B. Dans le cas général, la portion radialement extérieure 441 a une épaisseur comprise entre une épaisseur minimale E41min et une épaisseur maximale E41max. Dans le cas représenté, l'épaisseur minimale E41min et l'épaisseur maximale E41max de la portion radialement extérieure 441 sont égales entre elles, de telle sorte que l'épaisseur en tout point de ladite portion radialement extérieure 441 est constante. La portion radialement intérieure 442 a une épaisseur comprise entre une épaisseur minimale E42min et une épaisseur maximale E42max, qui, dans le cas général, ne sont pas égales. Sur la vue de détail E1, selon un mode de réalisation particulier, la portion radialement intérieure 432 a une hauteur H42 au moins égale à 1.5 fois son épaisseur maximale E42max, et une extrémité radialement intérieure 4421 circulaire dont le diamètre D4 est égal à son épaisseur maximale E42max.

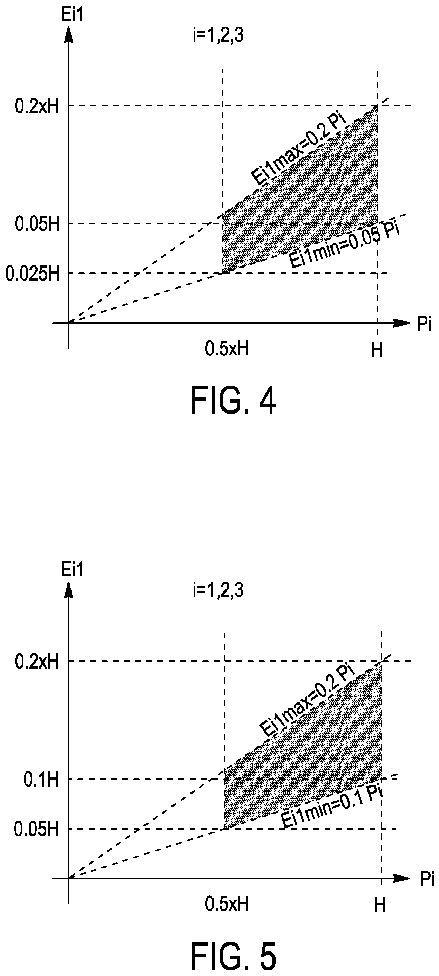

La figure 4 est un premier domaine de variation d'une épaisseur Ei1 de portion radialement extérieure 4i1 d'une découpure 4i, en fonction de la profondeur Pi de ladite découpure 4i, l'indice i pouvant prendre les valeurs 1, 2 et 3. Un indice i égal à 1 caractérise un sillon longitudinal 41, un indice i égal à 2 caractérise une découpure transversale inter-blocs 42 et un indice i égal à 3 caractérise une découpure transversale extérieure 43. L'épaisseur Ei1 est l'épaisseur mesurée en un point quelconque de la portion radialement extérieure 4i1. Pour une profondeur Pi comprise entre 50% de H et H, l'épaisseur Ei1 de ladite portion radialement extérieure, en tout point de la découpure 4i, est comprise entre 5% de Pi et 20% de Pi.

La figure 5 est un deuxième domaine de variation d'une épaisseur Ei1 de portion radialement extérieure 4i1 d'une découpure 4i, en fonction de la profondeur Pi de ladite découpure 4i, l'indice i pouvant prendre les valeurs 1, 2 et 3. L'épaisseur Ei1 est l'épaisseur mesurée en un point quelconque de la portion radialement extérieure 4i1. Pour une profondeur Pi comprise entre 50% de H et H, l'épaisseur Ei1 de ladite portion radialement extérieure, en tout point de la découpure 4i, est comprise entre 10% de Pi et 20% de Pi : c'est donc un domaine plus restreint que le premier domaine.

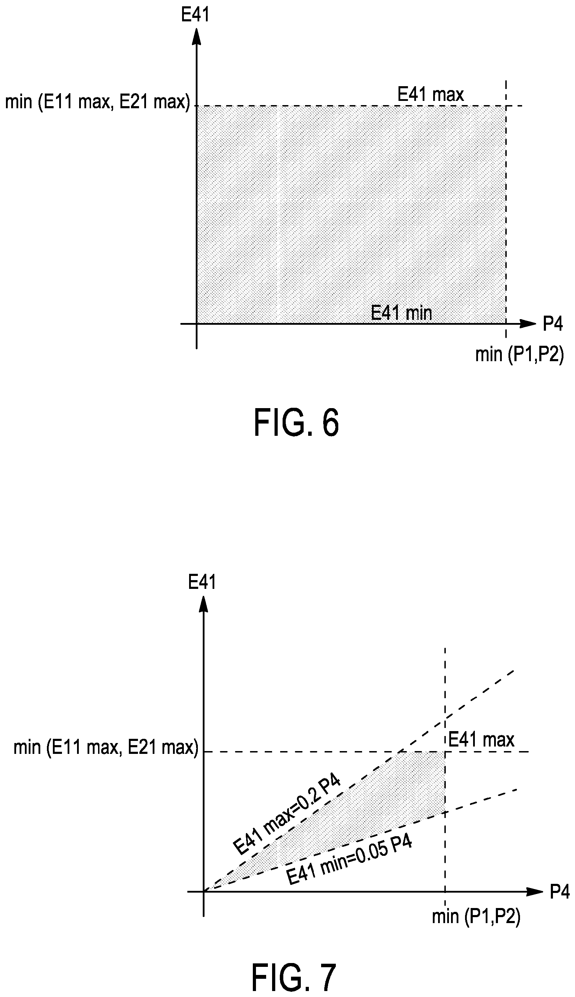

La figure 6 est un premier domaine de variation d'une épaisseur E41 de portion radialement extérieure 441 d'une découpure intérieure 44, en fonction de sa profondeur P4. L'épaisseur E41 est l'épaisseur mesurée en un point quelconque de la portion radialement extérieure 441. Dans ce premier domaine de variation, une découpure intérieure 44, formée dans un bloc 3, a une profondeur P4 au plus égale à min (P1, P2), c'est-à-dire la plus petite des profondeurs respectives (P1, P2) de chaque sillon longitudinal 41 et de chaque découpure transversale inter-blocs 42 délimitant le bloc 3 et une épaisseur E41, mesurée en un point quelconque de la portion radialement extérieure 441, donc une épaisseur maximale E41max au plus égale à min (E11max, E21max), c'est-à-dire la plus petite des épaisseurs maximales (E11max, E21max) de la portion radialement extérieure (411, 421) de chaque sillon longitudinal 41 et de chaque découpure transversale inter-blocs 42 délimitant le bloc 3.

La figure 7 est un deuxième domaine de variation d'une épaisseur E41 de portion radialement extérieure 441 d'une découpure intérieure 44, en fonction de sa profondeur P4. L'épaisseur E41 est l'épaisseur mesurée en un point quelconque de la portion radialement extérieure 441. Dans ce deuxième domaine de variation, une découpure intérieure 44, formée dans un bloc 3, a une profondeur P4 au plus égale à min (P1, P2), c'est-à-dire la plus petite des profondeurs respectives (P1, P2) de chaque sillon longitudinal 41 et de chaque découpure transversale inter-blocs 42 délimitant le bloc 3 et une épaisseur E41, mesurée en un point quelconque de la portion radialement extérieure 441, comprise entre 5% de P4 et 20% de P4. Ce domaine de variation est plus restreint que le premier domaine précédemment décrit.

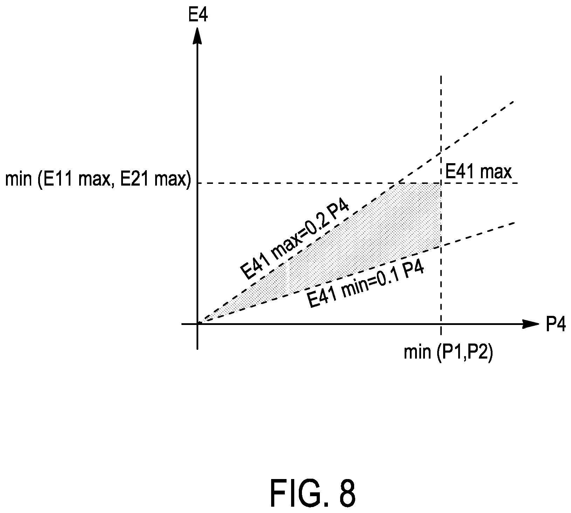

La figure 8 est un troisième domaine de variation d'une épaisseur E41 de portion radialement extérieure 441 d'une découpure intérieure 44, en fonction de sa profondeur P4. L'épaisseur E41 est l'épaisseur mesurée en un point quelconque de la portion radialement extérieure 441. Dans ce troisième domaine de variation, une découpure intérieure 44, formée dans un bloc 3, a une profondeur P4 au plus égale à min (P1, P2), c'est-à-dire la plus petite des profondeurs respectives (P1, P2) de chaque sillon longitudinal 41 et de chaque découpure transversale inter-blocs 42 délimitant le bloc 3 et une épaisseur E41, mesurée en un point quelconque de la portion radialement extérieure 441, comprise entre 10% de P4 et 20% de P4. Ce domaine de variation est plus restreint que le deuxième domaine précédemment décrit.

Une bande de roulement selon l'invention, telle que décrite dans les figures précédentes, a été étudiée par les inventeurs dans la dimension de pneumatique 53/80 R 63, pour un pneumatique destiné à équiper un véhicule lourd de génie civil, plus particulièrement un véhicule de type tombereau rigide. Un tel pneumatique est destiné à porter une charge égale à 82500 kg, pour une pression de gonflage égale à 6 bars.

Le tableau 1 ci-dessous présente les caractéristiques de la bande de roulement testée :

**[Tableau 1]**

| **Caractéristiques** | **Valeurs** |
|---|---|
| Largeur L de la bande de roulement | 1188 mm |
| Hauteur H de bande de roulement | 110 mm |
| Largeur L1 de la portion médiane de la bande de roulement | 235 mm |
| Longueur longitudinale B d'un bloc 3 de portion médiane | 260 mm |
| Epaisseur constante (E11max=E11min) d'une portion radialement extérieure 411 d'un sillon longitudinal 41 | 10 mm |
| Epaisseur minimale E12min d'une portion radialement intérieure 412 d'un sillon longitudinal 41 | 10 mm |
| Epaisseur maximale E12max d'une portion radialement intérieure 412 d'un sillon longitudinal 41 | 16 mm |
| Hauteur H12 d'une portion radialement intérieure 412 d'un sillon longitudinal 41 | 25 mm |
| Profondeur P1 d'un sillon longitudinal 41 | 96 mm |
| Epaisseur constante (E21max=E21min) d'une portion radialement extérieure 421 d'une découpure transversale inter-blocs 42 | 10 mm |
| Epaisseur minimale E22min d'une portion radialement intérieure 421 d'une découpure transversale inter-blocs 42 | 10 mm |
| Epaisseur maximale E22max d'une portion radialement intérieure 421 d'une découpure transversale inter-blocs 42 | 16 mm |
| Hauteur H22 d'une portion radialement intérieure 421 d'une découpure transversale inter-blocs 42 | 33 mm |
| Profondeur P2 d'une découpure transversale inter-blocs | 96 mm |
| 42 | |
| Epaisseur constante (E31max=E31min) d'une portion radialement extérieure 431 d'une découpure transversale extérieure 43 | 10 mm |
| Epaisseur minimale E32min d'une portion radialement intérieure 431 d'une découpure transversale extérieure 43 | 10 mm |
| Epaisseur maximale E32max d'une portion radialement intérieure 431 d'une découpure transversale extérieure 43 | 16 mm |
| Hauteur H32 d'une portion radialement intérieure 431 d'une découpure transversale extérieure 43 | 30 mm |
| Profondeur P3 d'une découpure transversale extérieure 43 | 96 mm |
| Epaisseur constante (E41max=E41min) d'une portion radialement extérieure 441 d'une découpure transversale intérieure 44 | 7 mm |
| Epaisseur minimale E42min d'une portion radialement intérieure 441 d'une découpure transversale intérieure 44 | 7 mm |
| Epaisseur maximale E42max d'une portion radialement intérieure 441 d'une découpure transversale intérieure 44 | 7 mm |
| Hauteur H42 d'une portion radialement intérieure 441 d'une découpure transversale intérieure 44 | 0 mm |
| Profondeur P4 d'une découpure transversale intérieure 44 | 36 mm |

Des tests de roulage dans des mines ont été réalisés sur des pneumatiques selon l'invention, et ont montré une résistance aux agressions mécaniques significativement améliorée par rapport à un pneumatique de référence dont la bande de roulement comprend des découpures, en particulier transversales, simples, sans portion radialement intérieure. On note en particulier une absence de fissures en fond de portion radialement intérieure de découpure, et une absence d'arrachements des blocs de la bande de roulement. En d'autres termes, une bande de roulement selon l'invention arrive à usure complète sans fissuration, alors qu'une la bande de roulement de référence subit des fissurations et/ou des arrachements de blocs en cours d'usure.

Concernant l'amélioration de la capacité de ventilation thermique des découpures étagées, des simulations numériques ont montré une baisse de température interne des blocs de 8°C lorsque ceux-ci comprennent en particulier une découpure transversale intérieure.

## Revendications

1. Bande de roulement (1) de pneumatique pour un véhicule lourd de génie civil, destinée à entrer en contact avec un sol par l'intermédiaire d'une surface de roulement (2), comprenant des blocs (3) délimités par des découpures (41, 42), et ayant une largeur L, et une hauteur H, définie comme la profondeur maximale de découpure,
- la bande de roulement ayant une portion médiane (11), symétrique par rapport à un plan longitudinal médian (XZ) et ayant une largeur L1 au plus égale à 60% de la largeur L de la bande de roulement,
- la portion médiane (11) comprenant au moins une rangée longitudinale de blocs (3), dont chaque bloc (3) est délimité transversalement par deux sillons longitudinaux (41) et longitudinalement par deux découpures transversales inter-blocs (42),
- chaque sillon longitudinal (41) et chaque découpure transversale inter-blocs (42) ayant respectivement une profondeur (P1, P2) au moins égale à 50% de la hauteur H de bande de roulement, et étant respectivement une découpure étagée, comprenant une portion radialement extérieure (411, 421) débouchant sur la surface de roulement (2) et une portion radialement intérieure (412, 422) s'étendant à partir de la portion radialement extérieure (411, 421) jusqu'à une extrémité radialement intérieure (4121, 4221),
- chaque portion radialement extérieure (411, 421) ayant une épaisseur, mesurée entre les parois de matière qui la délimitent, comprise entre une épaisseur minimale (E11min, E21min) et une épaisseur maximale (E11max, E21max),
- chaque portion radialement intérieure (412, 422) ayant une épaisseur, mesurée entre les parois de matière qui la délimitent, comprise entre une épaisseur minimale (E12min, E22min) et une épaisseur maximale (E12max, E22max),
**caractérisée en ce que** l'épaisseur maximale (E11max, E21max) de chaque portion radialement extérieure (411, 421) est au plus égale à 20% de la profondeur (P1, P2) de la découpure (41, 42) correspondante et strictement inférieure à l'épaisseur maximale (E12max, E22max) de la portion radialement intérieure (412, 422) correspondante **et en ce que** l'épaisseur minimale (E11min, E21min) de chaque portion radialement extérieure (411, 421) est au moins égale à 5% de la profondeur (P1, P2) de la découpure (41, 42) correspondante.

2. Bande de roulement (1) selon la revendication 1, **dans laquelle** l'épaisseur minimale (E11min, E21min) de chaque portion radialement extérieure (411, 421) est au moins égale à 10% de la profondeur (P1, P2) de la découpure (41, 42) correspondante.

3. Bande de roulement (1) selon l'une des revendications 1 ou 2, **dans laquelle** l'épaisseur minimale (E11min, E21min) et l'épaisseur maximale (E11max, E21max) de chaque portion radialement extérieure (411, 421) sont égales entre elles, de telle sorte que l'épaisseur en tout point de ladite portion radialement extérieure (411, 421) est constante.

4. Bande de roulement (1) selon l'une quelconque des revendications 1 à 3, **dans laquelle** l'épaisseur maximale (E12max, E22max) de chaque portion radialement intérieure (412, 422) est au moins égale à 15% de la profondeur (P1, P2) de la découpure (41, 42) correspondante.

5. Bande de roulement (1) selon l'une quelconque des revendications 1 à 4, **dans laquelle** chaque portion radialement intérieure (412, 422) a une hauteur (H12, H22) au moins égale à 1.5 fois l'épaisseur maximale (E12max, E22max) de la portion radialement intérieure (412, 422) correspondante.

6. Bande de roulement (1) selon l'une quelconque des revendications 1 à 5, **dans laquelle** chaque portion radialement intérieure (412, 422) a une extrémité radialement intérieure (4121, 4221) circulaire dont le diamètre (D1, D2) est égal à l'épaisseur maximale (E12max, E22max) de la portion radialement intérieure (412, 422) correspondante.

7. Bande de roulement (1) selon l'une quelconque des revendications 1 à 6, chaque bloc (3) ayant une longueur longitudinale B, **dans laquelle** la profondeur P2 de chaque découpure transversale inter-blocs (42) est au plus égale à la longueur longitudinale B de bloc (3), de préférence au plus égale à 0.8 fois la longueur longitudinale B de bloc (3).

8. Bande de roulement (1) selon l'une quelconque des revendications 1 à 7, comprenant des découpures transversales extérieures (43), débouchant dans les sillons longitudinaux (41) délimitant les blocs (3), ayant chacune une profondeur P3 au moins égale à 50% de la hauteur H de bande de roulement, et comprenant une portion radialement extérieure (431) et une portion radialement intérieure (432), chaque portion radialement extérieure (431) ayant une épaisseur comprise entre une épaisseur minimale E31min et une épaisseur maximale E31max, chaque portion radialement intérieure (432) ayant une épaisseur comprise entre une épaisseur minimale E32min et une épaisseur maximale E32max, **dans laquelle** l'épaisseur maximale E31max de chaque portion radialement extérieure (431) est au plus égale à 20% de la profondeur P3 de la découpure (43) correspondante et strictement inférieure à l'épaisseur maximale E32max de la portion radialement intérieure (412, 422, 432) correspondante, **et dans laquelle** l'épaisseur minimale E31min de chaque portion radialement extérieure (431) est au moins égale à 5% de la profondeur P3 de la découpure (43) correspondante.

9. Bande de roulement (1) selon l'une quelconque des revendications 1 à 8, **dans laquelle** chaque bloc (3) comprend au moins une découpure intérieure (44) ayant une profondeur P4 au plus égale à la plus petite des profondeurs respectives (P1, P2) de chaque sillon longitudinal (41) et de chaque découpure transversale inter-blocs (42) délimitant le bloc (3).

10. Bande de roulement (1) selon la revendication 9, chaque découpure intérieure (44) comprenant une portion radialement extérieure (441) ayant une épaisseur comprise entre une épaisseur minimale E41min et une épaisseur maximale E41max, **dans laquelle** l'épaisseur maximale E41max de la portion radialement extérieure (441) de la découpure intérieure (44) est au plus égale à la plus petite des épaisseurs maximales (E11max, E21max) de la portion radialement extérieure (411, 421) de chaque sillon longitudinal (41) et de chaque découpure transversale inter-blocs (42) délimitant le bloc (3).

11. Bande de roulement (1) selon la revendication 10, chaque découpure intérieure (44) comprenant une portion radialement intérieure (442) ayant une épaisseur comprise entre une épaisseur minimale E42min et une épaisseur maximale E42max, **dans laquelle** l'épaisseur maximale E41max de la portion radialement extérieure (441) de la découpure intérieure (44) est strictement inférieure à l'épaisseur maximale E42max de la portion radialement intérieure (442) de la découpure intérieure (44) correspondante.

12. Bande de roulement (1) selon l'une quelconque des revendications 9 à 11, **dans laquelle** chaque découpure intérieure (44) est transversale.

13. Bande de roulement (1) selon l'une quelconque des revendications 1 à 12, **dans laquelle** la portion médiane de la bande de roulement (1) comprend une rangée longitudinale de blocs (3) centrée sur le plan longitudinal médian (XZ).

14. Pneumatique destiné à équiper un véhicule lourd de génie civil comprenant une bande de roulement selon l'une des revendications 1 à 13.

## Patentansprüche

1. Laufstreifen (1) eines Reifens für ein Baustellenschwerlastfahrzeug, der dazu bestimmt ist, über eine Lauffläche (2) mit einem Boden in Kontakt zu gelangen, Blöcke (3) umfasst, die durch Ausschnitte (41, 42) begrenzt werden, und eine Breite L und eine Höhe H, definiert als die maximale Ausschnitttiefe, aufweist,
- wobei der Laufstreifen einen mittleren Abschnitt (11) aufweist, der zu einer Längsmittelebene (XZ) symmetrisch ist und eine Breite L1 von höchstens 60 % der Breite L des Laufstreifens aufweist,
- wobei der mittlere Abschnitt (11) mindestens eine Längsreihe von Blöcken (3) umfasst, von denen jeder Block (3) quer durch zwei Längsrillen (41) und längs durch zwei Zwischenblock-Querausschnitte (42) begrenzt wird,
- wobei jede Längsrille (41) und jeder Zwischenblock-Querausschnitt (42) jeweils eine Tiefe (P1, P2) von mindestens 50 % der Höhe H des Laufstreifens aufweisen und jeweils ein abgestufter Ausschnitt sind, umfassend einen radial äußeren Abschnitt (411, 421), der an der Lauffläche (2) mündet, und einen radial inneren Abschnitt (412, 422), der sich von dem radial äußeren Abschnitt (411, 421) aus bis zu einem radial inneren Ende (4121, 4221) erstreckt,
- wobei jeder radial äußere Abschnitt (411, 421) eine zwischen den ihn begrenzenden Materialwänden gemessene Dicke aufweist, die zwischen einer minimalen Dicke (E11min, E21min) und einer maximalen Dicke (E11min, E21min) liegt,
- wobei jeder radial innere Abschnitt (412, 422) eine zwischen den ihn begrenzenden Materialwänden gemessene Dicke aufweist, die zwischen einer minimalen Dicke (E12min, E22min) und einer maximalen Dicke (E12max, E22max) liegt,
**dadurch gekennzeichnet, dass** die maximale Dicke (E11max, E21max) jedes radial äußeren Abschnitts (411, 421) höchstens 20 % der Tiefe (P1, P2) des entsprechenden Ausschnitts (41, 42) beträgt und strikt geringer als die maximale Dicke (E12max, E22max) des entsprechenden radial inneren Abschnitts (412, 422) ist, und dass die minimale Dicke (E11min, E21min) jedes radial äußeren Abschnitts (411, 421) mindestens 5 % der Tiefe (P1, P2) des entsprechenden Ausschnitts (41, 42) beträgt.

2. Laufstreifen (1) nach Anspruch 1, wobei die minimale Dicke (E11min, E21min) jedes radial äußeren Abschnitts (411, 421) mindestens 10 % der Tiefe (P1, P2) des entsprechenden Ausschnitts (41, 42) beträgt.

3. Laufstreifen (1) nach einem der Ansprüche 1 oder 2, wobei die minimale Dicke (E11min, E21min) und die maximale Dicke (E11max, E21max) jedes radial äußeren Abschnitts (411, 421) untereinander gleich sind, so dass die Dicke an jedem Punkt des radial äußeren Abschnitts (411, 421) konstant ist.

4. Laufstreifen (1) nach einem der Ansprüche 1 bis 3, wobei die maximale Dicke (E12max, E22max) jedes radial inneren Abschnitts (412, 422) mindestens 15 % der Tiefe (P1, P2) des entsprechenden Ausschnitts (41, 42) beträgt.

5. Laufstreifen (1) nach einem der Ansprüche 1 bis 4, wobei jeder radial innere Abschnitt (412, 422) eine Höhe (H12, H22) aufweist, die mindestens das 1,5-Fache der maximalen Dicke (E12max, E22max) des entsprechenden radial inneren Abschnitts (412, 422) beträgt.

6. Laufstreifen (1) nach einem der Ansprüche 1 bis 5, wobei jeder radial innere Abschnitt (412, 422) ein kreisförmiges radial inneres Ende (4121, 4221) aufweist, dessen Durchmesser (D1, D2) gleich der maximalen Dicke (E12max, E22max) des entsprechenden radial inneren Abschnitts (412, 422) ist.

7. Laufstreifen (1) nach einem der Ansprüche 1 bis 6, wobei jeder Block (3) eine Längslänge B aufweist, wobei die Tiefe P2 jedes Zwischenblock-Querausschnitts (42) höchstens gleich der Längslänge B des Blocks (3) ist, vorzugsweise höchstens das 0,8-Fache der Längslänge B des Blocks (3) beträgt.

8. Laufstreifen (1) nach einem der Ansprüche 1 bis 7, der äußere Querausschnitte (43) umfasst, die in den die Blöcke (3) begrenzenden Längsrillen (41) münden, jeweils eine Tiefe P3 von mindestens 50 % der Höhe H des Laufstreifens aufweisen und einen radial äußeren Abschnitt (431) und einen radial inneren Abschnitt (432) umfassen, wobei jeder radial äußere Abschnitt (431) eine Dicke zwischen einer minimalen Dicke E31min und einer maximalen Dicke E31max aufweist, wobei jeder radial innere Abschnitt (432) eine Dicke zwischen einer minimalen Dicke E32min und einer maximalen Dicke E32max aufweist, wobei die maximale Dicke E31max jedes radial äußeren Abschnitts (431) höchstens 20 % der Tiefe P3 des entsprechenden Ausschnitts (43) beträgt und strikt geringer als die maximale Dicke E32max des entsprechenden radial inneren Abschnitts (412, 422, 432) ist, und wobei die minimale Dicke E31min jedes radial äußeren Abschnitts (431) mindestens 5 % der Tiefe P3 des entsprechenden Ausschnitts (43) beträgt.

9. Laufstreifen (1) nach einem der Ansprüche 1 bis 8, wobei jeder Block (3) mindestens einen inneren Ausschnitt (44) umfasst, der eine Tiefe P4 aufweist, die höchstens gleich der kleinsten der jeweiligen Tiefen (P1, P2) jeder Längsrille (41) und jedes Zwischenblock-Querausschnitts (42), die den Block (3) begrenzen, ist.

10. Laufstreifen (1) nach Anspruch 9, wobei jeder innere Ausschnitt (44) einen radial äußeren Abschnitt (441) umfasst, der eine Dicke zwischen einer minimalen Dicke E41min und einer maximalen Dicke E41max aufweist, wobei die maximale Dicke E41max des radial äußeren Abschnitts (441) des inneren Ausschnitts (44) höchstens gleich der kleinsten der maximalen Dicken (E11max, E21max) des radial äußeren Abschnitts (411, 421) jeder Längsrille (41) und jedes Zwischenblock-Querausschnitts (42), die den Block (3) begrenzen, ist.

11. Laufstreifen (1) nach Anspruch 10, wobei jeder innere Ausschnitt (44) einen radialen inneren Abschnitt (442) umfasst, der eine Dicke zwischen einer minimalen Dicke E42min und einer maximalen Dicke E42max aufweist, wobei die maximale Dicke E41max des radial äußeren Abschnitts (441) des inneren Ausschnitts (44) strikt geringer als die maximale Dicke E42max des radial inneren Abschnitts (442) des entsprechenden inneren Ausschnitts (44) ist.

12. Laufstreifen (1) nach einem der Ansprüche 9 bis 11, wobei jeder innere Ausschnitt (44) quer verläuft.

13. Laufstreifen (1) nach einem der Ansprüche 1 bis 12, wobei der mittlere Abschnitt des Laufstreifens (1) eine Längsreihe von Blöcken (3) umfasst, die auf die Längsmittelebene (XZ) zentriert ist.

14. Reifen für ein Baustellenschwerlastfahrzeug, der einen Laufstreifen nach einem der Ansprüche 1 bis 13 umfasst.

## Claims

1. Tyre tread (1) for a heavy civil engineering vehicle, designed to come into contact with the ground via a running surface (2), comprising blocks (3) delimited by cut-outs (41, 42), and having a width L and a height H, defined as the maximum cut-out depth,
- the tread having a median portion (11), symmetrical about a median longitudinal plane (XZ) and having a width L1 of not more than 60% of the width L of the tread,
- the median portion (11) comprising at least one longitudinal row of blocks (3), wherein each block (3) is delimited transversely by two longitudinal channels (41) and longitudinally by two inter-block transverse cut-outs (42),
- each longitudinal channel (41) and each inter-block transverse cut-out (42), respectively, having a depth (P1, P2) equal to at least 50% of the tread height H, and being, respectively, a staged cut-out comprising a radially outer portion (411, 421) opening on to the running surface (2) and a radially inner portion (412, 422) extending from the radially outer portion (411, 421) to a radially inner end (4121, 4221),
- each radially outer portion (411, 421) having a thickness, measured between the walls of material delimiting it, within the range from a minimum thickness (E11min, E21min) to a maximum thickness (E11max, E21max),
- each radially inner portion (412, 422) having a thickness, measured between the walls of material delimiting it, within the range from a minimum thickness (E12min, E22min) to a maximum thickness (E12max, E22max),
**characterized in that** the maximum thickness (E11max, E21max) of each radially outer portion (411, 421) is equal to not more than 20% of the depth (P1, P2) of the corresponding cut-out (41, 42) and strictly less than the maximum thickness (E12max, E22max) of the corresponding radially inner portion (412, 422) **and in that** the minimum thickness (E11min, E21min) of each radially outer portion (411, 421) is equal to at least 5% of the depth (P1, P2) of the corresponding cut-out (41, 42).

2. Tread (1) according to Claim 1, **wherein** the minimum thickness (E11min, E21min) of each radially outer portion (411, 421) is equal to at least 10% of the depth (P1, P2) of the corresponding cut-out (41, 42).

3. Tread (1) according to either of Claims 1 and 2, **wherein** the minimum thickness (E11min, E21min) and the maximum thickness (E11max, E21max) of each radially outer portion (411, 421) are equal to one another, so that the thickness at all points of said radially outer portion (411, 421) is constant.

4. Tread (1) according to any of Claims 1 to 3, **wherein** the maximum thickness (E12max, E22max) of each radially inner portion (412, 422) is equal to at least 15% of the depth (P1, P2) of the corresponding cut-out (41, 42).

5. Tread (1) according to any of Claims 1 to 4, **wherein** each radially inner portion (412, 422) has a height (H12, H22) equal to at least 1.5 times the maximum thickness (E12max, E22max) of the corresponding radially inner portion (412, 422).

6. Tread (1) according to any of Claims 1 to 5, **wherein** each radially inner portion (412, 422) has a circular radially inner end (4121, 4221) whose diameter (D1, D2) is equal to the maximum thickness (E12max, E22max) of the corresponding radially inner portion (412, 422).

7. Tread (1) according to any of Claims 1 to 6, each block (3) having a longitudinal length B, **wherein** the depth P2 of each inter-block transverse cut-out (42) is equal to not more than the longitudinal length B of the block (3), or preferably not more than 0.8 times the longitudinal length B of the block (3).

8. Tread (1) according to any of Claims 1 to 7, comprising outer transverse cut-outs (43), opening into the longitudinal channels (41) delimiting the blocks (3), each having a depth P3 equal to at least 50% of the tread height H, and comprising a radially outer portion (431) and a radially inner portion (432), each radially inner portion (431) having a thickness within the range from a minimum thickness E31min to a maximum thickness E31max, each radially inner portion (432) having a thickness in the range from a minimum thickness E32min to a maximum thickness E32max, **wherein** the maximum thickness E31max of each radially outer portion (431) is equal to not more than 20% of the depth P3 of the corresponding cut-out (43) and strictly less than the maximum thickness E32max of the corresponding radially inner portion (412, 422, 432), **and wherein** the minimum thickness E31min of each radially outer portion (431) is equal to at least 5% of the depth P3 of the corresponding cut-out (43).

9. Tread (1) according to any of Claims 1 to 8, **wherein** each block (3) comprises at least one internal cut-out (44) having a depth P4 not greater than the smallest of the respective depths (P1, P2) of each longitudinal channel (41) and of each inter-block transverse cut-out (42) delimiting the block (3).

10. Tread (1) according to Claim 9, each internal cut-out (44) comprising a radially outer portion (441) having a thickness in the range from a minimum thickness E41min to a maximum thickness E41max, **wherein** the maximum thickness E41max of the radially outer portion (441) of the internal cut-out (44) is not greater than the smallest of the maximum thicknesses (E11max, E21max) of the radially outer portion (411, 421) of each longitudinal channel (41) and of each inter-block transverse cut-out (42) delimiting the block (3).

11. Tread (1) according to Claim 10, each internal cut-out (44) comprising a radially inner portion (442) having a thickness in the range from a minimum thickness E42min to a maximum thickness E42max, **wherein** the maximum thickness E41max of the radially outer portion (441) of the internal cut-out (44) is strictly less than the maximum thickness E42max of the radially inner portion (442) of the corresponding internal cut-out (44).

12. Tread (1) according to any of Claims 9 to 11, **wherein** each internal cut-out (44) is transverse.

13. Tread (1) according to any of Claims 1 to 12, **wherein** the median portion of the tread (1) comprises a longitudinal row of blocks (3) centred on the median longitudinal plane (XZ).

14. Tyre to be fitted to a heavy civil engineering vehicle, comprising a tread according to any of Claims 1 to 13.
